(19) Europäisches Patentamt
European Patent Office
Office européen des brevets

(11) **EP 2 554 257 A1**

(12) **EUROPEAN PATENT APPLICATION**
published in accordance with Art. 153(4) EPC

(43) Date of publication:
06.02.2013 Bulletin 2013/06

(51) Int Cl.:
*B01J 23/75* (2006.01)  *B01J 35/10* (2006.01)
*B01J 37/03* (2006.01)  *B01J 37/04* (2006.01)
*B01J 37/16* (2006.01)  *C01B 3/04* (2006.01)

(21) Application number: **11765553.0**

(22) Date of filing: **29.03.2011**

(86) International application number:
**PCT/JP2011/057821**

(87) International publication number:
**WO 2011/125653 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 02.06.2010   JP 2010126404
31.03.2010   JP 2010080137
31.03.2010   JP 2010080136
31.03.2010   JP 2010080134

(71) Applicant: **Nippon Shokubai Co., Ltd.**
**Osaka-shi, Osaka 541-0043 (JP)**

(72) Inventors:
• **OKAMURA, Junji**
  **Himeji-shi**
  **Hyogo 671-1292 (JP)**
• **HORIUCHI, Toshitaka**
  **Himeji-shi**
  **Hyogo 671-1292 (JP)**
• **TSUNEKI, Hideaki**
  **Suita-shi**
  **Osaka 564-8512 (JP)**
• **YOSHIMUNE, Masanori**
  **Suita-shi**
  **Osaka 564-8512 (JP)**
• **ICHINOSE, Masami**
  **Suita-shi**
  **Osaka 564-8512 (JP)**

(74) Representative: **Müller-Boré & Partner**
**Patentanwälte**
**Grafinger Straße 2**
**81671 München (DE)**

(54) **CATALYST FOR DECOMPOSING AMMONIA, METHOD FOR PRODUCING THE CATALYST AND METHOD FOR PRODUCING HYDROGEN USING THE CATALYST**

(57)    It is provided that the catalyst shows a high activity in an ammonia decomposition reaction and can efficiently decompose ammonia into hydrogen and nitrogen. The catalyst for decomposing ammonia of the present invention comprises at least one element (component (A)) selected from the elements of groups 6 to 10 of the long-form periodic table, and an oxide and/or complex oxide of at least one element (component (B)) selected from the elements of groups 2 to 5 and groups 12 to 15 of the long-form periodic table, wherein the calculated specific surface area (S2) of the component (A) is 20 m$^2$/g or larger, and the ratio (S2/S1) of the calculated specific surface area (S2) of the component (A) to the specific surface area (S1) of the catalyst per se is 0.15 to 0.85.

EP 2 554 257 A1

**Description**

TECHNICAL FIELD

The present invention is an invention relating to a catalyst for decomposing ammonia, a method for producing the catalyst, and a method for producing hydrogen using the catalyst.

BACKGROUND ART

Techniques for producing hydrogen by ammonia decomposition have been proposed from long ago, but it is the present state that the techniques are hardly actually used. For example, a technique for obtaining hydrogen by decomposing ammonia generated from a coke oven is proposed (Patent Document 1). The catalyst necessitates a platinum group, and thus an increase in cost is a practical problem. On the other hand, in order to overcome a problem of a noble metal catalyst using a platinum group as an essential component, a non-noble metal catalyst is proposed. As the non-noble metal catalyst, a catalyst using at least one metal or compound selected from copper group elements, chromium group elements and iron group elements and nickel as catalytic components is proposed (Patent Document 2). By combining each component such as cobalt, copper or chromium with nickel, the catalyst has improved catalytic performance as compared to a catalyst comprising a single component of nickel. A catalyst by combining a rare earth and nickel is also proposed (Patent Document 3).

These catalysts are prepared by impregnating a carrier with a high specific surface area with a solution of each catalytic component, and the catalytic component is dispersed and supported on the surface utilizing an oxide surface with a high specific surface area, thereby attempting to physically increase the catalytically active sites and improve the activity as a whole catalyst.

PRIOR ART DOCUMENTS

PATENT DOCUMENTS

Patent Document 1: JP-A-05-329372
Patent Document 2: JP-A-02-198638
Patent Document 3: JP-A-02-198639

SUMMARY OF THE INVENTION

PROBLEMS TO BE SOLVED BY THE INVENTION

In a catalyst system in which the number of catalytically active sites is increased by using a carrier with a high specific surface area, with the reduction of the specific surface area of the carrier material due to thermal degradation, the catalytically active sites are also decreased, and the catalytic activity is reduced. In addition, even when a large amount of a catalytic component is impregnated and supported on a carrier component to increase the catalytically active sites, the particles comprising the catalytic component is likely to aggregate, and thus the catalytically active specific surface area is not consequently increased. Therefore, even when the content of the catalytic component impregnated to the carrier component is increased, an activity increase compatible with the content increase is not obtained, the catalytic activity is rather reduced by the content increase, and thus it is difficult to produce a catalyst having sufficient catalytic activity. It is desired to overcome the problems of the conventional catalyst and to develop a highly active catalyst also excellent in practicality in cost.

Also, it is possible to support the conventional catalyst in which a catalytic component is supported on a carrier with a high specific surface area on the surface of the carrier uniformly in a highly dispersed state, as long as the amount of supporting the catalytic component is small like less than 5% by mass. However, when a large amount of the catalytic component is attempted to be supported in order to improve catalytic activity, the catalytic component aggregates on the surface of the carrier to be nonuniform, and it cannot be supported in a highly dispersed state. Therefore, the catalytic activity is not improved even when the content of the catalytic component is increased, and thus it is difficult to produce a highly active catalyst for decomposing ammonia using a non-noble metal element having high practicality in cost. It is desired to overcome the problems of the conventional catalyst and to develop a highly active non-noble metal catalyst also excellent in practicality in cost.

Furthermore, many catalysts for decomposing ammonia conventionally proposed relate to ammonia decomposition under dry gas conditions not containing water vapor, and the effect of coexistent water vapor on ammonia decomposition activity has hardly been studied. On the other hand, since water vapor contained in a reaction gas has a reaction inhibitory effect on ammonia decomposition reaction, it may be difficult to effectively decompose ammonia even when directly applying the catalyst for decomposing ammonia conventionally proposed to the ammonia decomposition reaction in coexistence with water vapor. Therefore, without using a noble metal element having the practical cost problem, a catalyst that can effectively decompose ammonia even when water vapor is contained in ammonia gas is desired.

SOLUTIONS TO THE PROBLEMS

Referring to the problems of the conventional catalyst prepared simply by supporting each catalytic component on the surface of a carrier component to physically increase the catalytically active sites, the present inventors have developed a catalyst system having a high catalytically active specific surface area even when a large amount of catalytically active component is contained; a catalyst system that can maintain a catalytic component uniformly and in a highly dispersed state even when a large amount of catalytically active component is contained; and a catalyst that can effectively decompose ammonia into nitrogen and hydrogen even in the presence of water vapor.

The first catalyst of the present invention that can solve the above problems is a catalyst containing at least one element (component (A)) selected from the elements of groups 6 to 10 of the long-form periodic table, and an oxide and/or complex oxide of at least one element (component (B)) selected from the elements of groups 2 to 5 and groups 12 to 15 of the long-form periodic table, wherein the calculated specific surface area (S2) of the component (A) is 20 $m^2/g$ or larger, and the ratio (S2/S1) of the calculated specific surface area (S2) of the component (A) to the specific surface area (S1) of the catalyst per se is 0.15 to 0.85.

It is preferable that the oxide and/or complex oxide of the component (B) is an oxide and/or complex oxide of at least one element selected from the group consisting of alumina, silica, titania, hafnia, zirconia, zinc oxide, alkaline earth metal oxides, and lanthanoid metal oxides. It is preferable that the catalyst contains the component (A) in an amount of 55 to 95% by mass based on the total amount of the catalyst. It is preferable that the first catalyst is used for decomposing ammonia into nitrogen and hydrogen in the presence of water vapor.

The method for producing the first catalyst is preferably that dissolving a water soluble salt of the component (A) and a water soluble salt of the component (B) in water to produce a precipitate by an alkaline compound, followed by filtering, washing with water, drying, and heat-treating the precipitate.
And the method for producing the first catalyst is preferably that adding a water soluble salt of the component (A) to water to prepare an aqueous solution, adding an alkaline compound to the aqueous solution to precipitate fine particles containing the component (A) to prepare a dispersion of the fine particles, adding a sol solution dispersing fine particles containing the component (B) with stirring the dispersion of the fine particles to produce a precipitate comprising the fine particles containing the component (A) and the fine particles containing the component (B), followed by filtering, washing with water, drying, and heat-treating the precipitate.

The second catalyst of the present invention is a catalyst containing at least one element (component (A)) selected from the elements of groups 6 to 10 of the long-form periodic table, and an oxide and/or complex oxide of at least one element (component (B)) selected from the elements of groups 2 to 5 and groups 12 to 15 of the long-form periodic table, wherein when the catalyst is pressure-formed into a film, and the characteristic X-ray intensity of the component (A) on an arbitrary straight line in the surface of the film-formed catalyst is measured using an electron probe microanalyzer (EPMA) having a beam diameter of 1 $\mu$m, the average value of the characteristic X-ray intensity (S) and the standard deviation of the characteristic X-ray intensity ($\sigma$) calculated from the obtained measurement results satisfy $0 \le \sigma/S < 0.15$.

It is preferable that the catalyst contains the component (A) in an amount of 50 to 97% by mass based on the total amount of the catalyst. The method for producing the first catalyst is preferably that bringing an aqueous solution of the component (A) into a sufficiently stirred state with ultrasonic treatment, and heat-treating a precipitate obtained by adding thereto an aqueous liquid containing a precursor of the oxide and/or complex oxide of the component (B).

The present invention includes a method for producing hydrogen, comprising decomposing ammonia to obtain hydrogen using the first or second catalyst; a method for producing hydrogen, comprising decomposing ammonia into nitrogen and hydrogen in the presence of water vapor using the first or second catalyst; a method for producing hydrogen, comprising decomposing ammonia in a gas containing 1 to 40% by volume of water vapor, 1 to 99% by volume of ammonia, 0 to 50% by volume of hydrogen, and nitrogen (the total volume of water vapor, ammonia, hydrogen and nitrogen is 100% by volume) into nitrogen and hydrogen using the first or second catalyst.

EFFECTS OF THE INVENTION

Even when the content of the component (A) that is an active component is increased, the first catalyst for decomposing ammonia of the present invention can maintain the ratio of the calculated specific surface area (S2) of the component (A) to the specific surface area (S1) of the catalyst at a high level. Therefore, without using a noble metal catalyst having the practical cost problem, the catalyst shows a high activity in an ammonia decomposition reaction and can efficiently decompose ammonia into hydrogen and nitrogen. Even when the content of the component (A) that is an active component (preferably, at least one element selected from the group consisting of iron, cobalt, and nickel) is increased, the second catalyst for decomposing ammonia of the present invention has a high compositional homogeneity without aggregation of the catalytically active component to contain the catalytically active component in the highly dispersed state in the catalyst. Therefore, without using a noble metal catalyst having the practical cost problem, the catalyst shows a high activity in an ammonia decomposition reaction and can efficiently decompose ammonia into hydrogen and nitrogen. In addition, even when water vapor is contained in a source gas, the catalyst for decomposing ammonia of the present invention effectively shows catalytic action without getting much reaction inhibitory effect and can effectively decompose ammonia into hydrogen and nitrogen.

MODE FOR CARRYING OUT THE INVENTION

The catalyst for decomposing ammonia of the present invention is a catalyst containing at least one element (component (A)) selected from the elements of groups 6 to 10 of the long-form periodic table, and an oxide and/or complex oxide of at least one element (component (B)) selected from the elements of groups 2 to 5 and groups 12 to 15 of the long-form periodic table.

The component (A) uses at least one element selected from the elements of groups 6 to 10 of the long-form periodic table and is preferably at least one element selected from the group consisting of iron, cobalt, and nickel and more preferably cobalt or nickel. The state of the component (A) may be any of a metal, an oxide, and a mixture thereof, and is preferably the metal state.

The content of the component (A) in the catalyst is preferably from 55 to 95% by mass, more preferably from 60 to 90% by mass, and further preferably from 65 to 85% by mass, based on the catalyst. When the content of the component (A) is less than 55% by mass, enough ammonia decomposition activity may not be obtained, and when exceeding 95% by mass, the component (B) may be insufficient relative to the component (A), aggregation of the component (A) may proceed under the reaction conditions, and heat resistance may be reduced.

The oxide and/or complex oxide of the component (B) is an oxide and/or complex oxide of at least one element selected from the elements of groups 2 to 5 and groups 12 to 15 of the long-form periodic table, preferably an oxide and/or complex oxide of at least one element selected from the group consisting of alumina, silica, titania, hafnia, zirconia, alkaline earth metal oxides, and lanthanoid metal oxides, and more preferably an oxide and/or complex oxide of at least one element selected from the group consisting of alumina, silica, zirconia, magnesia, ceria, and lanthanum oxide. The composite oxide is not a simple physical mixture of individual metal oxides but refers to a substance obtained by forming a composite of a solid solution of ceria and zirconia and each constituent metal element exemplified by silica and alumina at the atomic level and being in the state showing different characteristics in the structural and physical aspects as compared to the simple physical mixture of individual metal oxides.

The catalyst for decomposing ammonia of the present invention has a calculated specific surface area (S2) of the component (A) of preferably 20 $m^2/g$ or larger, more preferably 25 $m^2/g$ or larger, and further preferably 30 $m^2/g$ or larger. When the calculated specific surface area (S2) of the component (A) is 20 $m^2/g$ or larger, the catalytic activity of the catalyst for decomposing ammonia is further improved. The larger calculated specific surface area (S2) of the component (A) is more preferred, but there is also a limit to the value that can be increased by improvement of the catalyst preparation method or the like, and the calculated specific surface area (S2) of the component (A) is practically preferably 250 $m^2/g$ or smaller, more preferably 200 $m^2/g$ or smaller, and further preferably 150 $m^2/g$ or smaller.

The calculated specific surface area (S2) of the component (A) is calculated by subtracting the specific surface area derived from the oxide of the component (B) from the specific surface area of the catalyst. The oxide of the component (B) is prepared, for example, by dissolving a water soluble salt of the component (B) in water, adding thereto an alkaline compound used in the preparation of the catalyst to obtain a precipitate of the component (B) (e.g., hydroxide), followed by filtering, washing with water, drying, and reducing the precipitate of the component (B) (e.g., hydroxide) in the same manner as in the preparation procedure of the catalyst to prepare an oxide of the component (B). For the obtained oxide of the component (B), the specific surface area (S(b)) is measured by BET method using nitrogen gas. The calculated specific surface area (S2) of the component (A) can be obtained by subtracting the specific surface area derived from the oxide of the component (B) contained in the catalyst (S(b) x the mass content of the oxide of the component (B) in the catalyst) from the specific surface area (S1) of the catalyst.

The catalyst for decomposing ammonia of the present invention has a specific surface area (S1) of preferably from 20 to 450 $m^2/g$, more preferably from 25 to 400 $m^2/g$, and further preferably from 30 to 350 $m^2/g$. When the specific surface area (S1) of the catalyst is 20 $m^2/g$ or larger, the catalytic performance is further improved, and when 450 $m^2/g$ or smaller, the catalyst has good heat resistance. The specific surface area of the catalyst for decomposing ammonia is measured by BET method using nitrogen gas.

The ratio (S2/S1) of the calculated specific surface area (S2) of the component (A) to the specific surface area (S1) of the catalyst is preferably 0.15 or larger, more preferably 0.20 or larger, and further preferably 0.22 or larger, and preferably 0.85 or smaller, more preferably 0.80 or smaller, and further preferably 0.75 or smaller. When the ratio (S2/S1) is less than 0.15, the calculated specific surface area of the component (A) in the catalyst is small, and enough activity may not be obtained, and when exceeding 0.85, heat resistance is reduced, and durability may be reduced. Incidentally, in a case where nickel is used as the component (A), since nickel has a catalytic activity slightly inferior to that of other component (A) (e.g., cobalt), the ratio (S2/S1) is set to preferably 0.50 or larger, more preferably 0.55 or larger, and further more preferably 0.60 or larger.

In addition, in the catalyst for decomposing ammonia, it is preferred that the component (A) be contained uniformly in a highly dispersed state in the catalyst. Specifically, when the catalyst is pressed to be pressure-formed into a film, and the characteristic X-ray intensity of the component (A) on an arbitrary straight line in the surface of the film-formed catalyst is measured using an electron probe microanalyzer (EPMA) having a beam diameter of 1 $\mu$m, it is preferred that the average value (S) of the characteristic X-ray intensity and the standard deviation ($\sigma$) of the characteristic X-ray intensity calculated from the obtained measurement results satisfy $0 \leq \sigma/S < 0.15$.

More specifically, the uniformity of the component (A) can be measured in the following conditions. The apparatus used for measurement is a commercially available electron probe microanalyzer (EPMA). The beam diameter of the electron beam that is a probe is 1 $\mu$m, and the characteristic X-ray dose of the component (A) is measured every 1$\mu$ m in the surface of a catalyst sample by the probe. The characteristic X-ray dose of the component (A) is measured by the probe in a width of each 900 $\mu$m to the x-axis and y-axis of the surface of the catalyst. The arbitrary point in the y-axis direction in the obtained measurement result is selected, and a total of 450 points of the characteristic X-ray measured values of the component (A) at intervals of 2 $\mu$m in the x-axis direction while fixing the position of the y-axis are picked up, and the average value (S) and the standard deviation ($\sigma$) are obtained. The ratio ($\sigma/S$) is calculated from the average value (S) and the standard deviation ($\sigma$), and the uniformity of the component (A) in the catalyst is evaluated by the calculated value. The smaller the value of the ratio ($\sigma/S$), the higher the uniformity of the component (A) in the catalyst. In the catalyst according to the invention of the present application, the value is preferably less than 0.15 and more preferably less than 0.12.

The shape of the catalyst for decomposing ammonia of the present invention can be various shapes such as granular, spherical, pellet, saddle-shaped, cylindrical, plate, and honeycomb.

Even when water vapor is contained in a source gas, the catalyst for decomposing ammonia of the present invention effectively shows catalytic action without getting much reaction inhibitory effect and can effectively decompose ammonia into hydrogen and nitrogen. Therefore, it can be suitably used in a method for producing hydrogen by decomposing ammonia in an ammonia-containing gas in coexistence with water vapor.

An example of the method for producing the catalyst according to the present invention is shown. The present invention is not limited to the following catalyst production methods as long as they exhibit the effect of the present invention. Examples of the method for producing the catalyst of the present invention include (1) a method for obtaining the catalyst comprising adding a water soluble salt of the component (A) to water to prepare an aqueous solution, adding an alkaline compound to the aqueous solution to precipitate fine particles containing the component (A) (e.g., fine particles of a hydroxide of the component (A)) to prepare a dispersion of the fine particles, and adding a sol solution dispersing fine particles containing the component (B) (e.g., fine particles of an oxide of the component (B)) with stirring the dispersion of the fine particles to produce a precipitate comprising the fine particles containing the component (A) (e.g., fine particles of a hydroxide of the component (A)) and the fine particles containing the component (B) (e.g., fine particles of an oxide of the component (B)), followed by taking out the precipitate by filtration, washing with water, drying, and heat-treating the filtrate (e.g., heat-treating under a reducing atmosphere); (2) a method for obtaining the catalyst comprising adding a water soluble salt of the component (B) and a water soluble salt of the component (A) to water and sufficiently mixing them, then adding an alkaline compound to produce a precipitate of fine particles containing the component (A) and the component (B) (e.g., fine particles of hydroxides), followed by taking out the precipitate by filtration, washing with water, drying, and heat-treating the filtrate (e.g., heat-treating under a reducing atmosphere); and (3) a method for obtaining the catalyst comprising preparing an alkaline aqueous solution to which an alkaline compound is added, adding a mixed aqueous solution containing a water soluble salt of the component (B) and a water soluble salt of the component (A) to the stirred alkaline aqueous solution to produce a precipitate comprising fine particles containing the component (A) (e.g., fine particles of a hydroxide of the component (A)) and fine particles containing the component (B) (e.g., fine particles of a hydroxide of the component (B)), followed by taking out the precipitate by filtration, washing with water, drying, and heat-treating the filtrate (e.g., heat-treating under a reducing atmosphere).

In addition, examples of the production method in a case of specifically increasing the dispersibility of the component (A) include (4) a method for obtaining the catalyst comprising charging an aqueous solution 1 obtained by dissolving a water soluble salt of the component (A) (e.g., a nitrate of the component (A)) in water into a glass beaker, storing the glass beaker in an ultrasonic generator and irradiating with ultrasonic wave, bringing the aqueous solution 1 into the completely mixed state by further rotating a stirrer with stirring blades with a three-one motor, adding a mixed solution of a sol dispersing fine particles containing the component (B) and an alkaline aqueous solution dropwise to the aqueous solution 1 in the completely mixed state (i.e., the state stirred with a stirrer with stirring blades while irradiating with ultrasonic wave) to produce fine particles of a catalyst precursor with uniform composition comprising the component (A) and the component (B) in an aqueous solution in the completely mixed state, followed by filtering, washing with water and drying the fine particles of a catalyst precursor, and then carrying out a predetermined heat-treatment (reduction treatment); (5) when the component (B) comprises plural elements (B1) and (B2), a method for obtaining the catalyst comprising charging an aqueous solution 2 obtained by dissolving a water soluble salt of the component (A) (e.g., a nitrate of the component (A)) and a water soluble salt of the component (B1) (e.g., a nitrate of the component (B1)) in water into a glass beaker, storing the glass beaker in an ultrasonic generator and irradiating with ultrasonic wave, bringing the aqueous solution 2 into the completely mixed state by further rotating a stirrer with stirring blades with a three-one motor, adding a mixed solution of a sol dispersing fine particles containing the component (B2) and an alkaline aqueous solution dropwise to the aqueous solution 2 in the completely mixed state (i.e., the state stirred with a stirrer with stirring blades while irradiating with ultrasonic wave) to produce fine particles of a catalyst precursor with uniform composition comprising the component (A), the component (B1) and the component (B2) in an aqueous solution in the completely mixed state, followed by filtering, washing with water and drying the fine particles of a catalyst precursor, and then carrying out a predetermined heat-treatment (reduction treatment); and (6) a method for obtaining the catalyst comprising charging an aqueous solution 3 obtained by dissolving a water soluble salt of the component (A) (e.g., a nitrate of the component (A)) and a water soluble salt of the component (B) (e.g., a nitrate of the component (B)) in water into a glass beaker, storing the glass beaker in an ultrasonic generator and irradiating with ultrasonic wave, bringing the aqueous solution 3 into the completely mixed state by further rotating a stirrer with stirring blades with a three-one motor, adding an alkaline compound or the like to dispersions (A) and (B) in the completely mixed state (i.e., the state stirred with a stirrer with stirring blades while irradiating with ultrasonic wave) to adjust pH to precipitate fine particles containing the components (A) and (B) (e.g., fine particles of hydroxides of the components (A) and (B)), followed by filtering and drying the precipitate, and then carrying out a predetermined heat-treatment (reduction treatment).

In the above production methods, the heat treatment includes calcination under air atmosphere; heat treatment under an inert gas atmosphere such as nitrogen or argon; and reduction under a reducing gas atmosphere containing a reducing gas such as hydrogen. In addition, it is preferred that a catalyst be subjected to reduction treatment in usage. As a reduction method, a usual method that brings into contact with a reducing gas such as hydrogen gas can be adopted. When reduction treatment using hydrogen gas is performed, it is treated in the reducing conditions of a temperature of from 300 to 750°C and preferably from 400 to 650°C, for 30 minutes to 2 hours. Incidentally, when a source gas contains oxygen gas upon producing hydrogen, ammonia combustion reaction proceeds with ammonia decomposition reaction. The catalyst temperature is immediately increased by the ammonia combustion reaction, and the catalyst is reduced by the hydrogen produced by ammonia decomposition. Therefore, when a source gas contains oxygen gas, there is a case where a catalyst for decomposing ammonia can be used even if not being subjected to reduction treatment before being used.

A raw material of the component (A) can use any compound as long as it is a compound that produces a metal, an oxide, and a mixture thereof, by heat treatment (preferably, reduction treatment) or the like, and is preferably a nitrate, an acetate or a chloride that is a water-soluble compound. Examples of the water soluble salt of the component (A) include water soluble salts of cobalt such as cobalt nitrate hexahydrate; and water soluble salts of nickel such as nickel nitrate hexahydrate.

A raw material of the component (B) can use any compound as long as it is a compound that finally produces an oxide and/or complex oxide by heat treatment, and can use preferably a nitrate, an acetate, a chloride or a sulfate of various metals, that is a water-soluble compound. Examples of the water-soluble salt of the component (B) include water-soluble salts of aluminum such as aluminum nitrate nonahydrate; water-soluble salts of magnesium such as magnesium nitrate hexahydrate; water-soluble salts of cerium such as cerium nitrate hexahydrate; and water-soluble salts of zirconium such as zirconium oxynitrate. In addition, the fine particles of the component (B) include alumina sol; and silica sol.

Examples of the alkaline compound include ammonia compounds such as ammonia, ammonium carbonate, and tetramethylammonium hydroxide; and alkali metal hydroxides such as potassium hydroxide.

The frequency of the ultrasonic wave irradiated from the ultrasonic generator is preferably from 20 kHz to 100 kHz. When the frequency of the ultrasonic wave is in the above range, the dispersibility of the component (A) can be further increased.

The drying temperature after water washing is preferably from 50 to 200°C, and the temperature of heat treatment is from 300 to 750°C and preferably from 400 to 650°C. The heat treatment includes calcination under air atmosphere, heat treatment under an inert gas atmosphere such as nitrogen or argon, and reduction under a reducing gas atmosphere containing a reducing gas such as hydrogen. In addition, it is preferred that the catalyst be subjected to reduction treatment in usage, and as a reduction method, a usual method that brings into contact with a reducing gas such as hydrogen gas can be adopted. When reduction treatment using hydrogen gas is performed, it is treated in the reducing conditions of a temperature of from 300 to 750°C and preferably from 400 to 650°C, for 30 minutes to 2 hours.

The method for producing hydrogen using the catalyst decomposing ammonia according to the present invention produces hydrogen by decomposing ammonia gas using the catalyst. The source gas is ammonia gas, and other gas can be added as long as it does not inhibit the effect of the present invention. Examples are nitrogen, argon, helium, carbon monoxide, and oxygen. Particularly, when the source gas contains oxygen, ammonia gas and a part of the hydrogen produced in the ammonia decomposition reaction are burned, and ammonia decomposition can be carried out by an autothermal reformer using the combustion heat as a reaction heat of ammonia decomposition reaction. In the case, the molar ratio of oxygen to ammonia (oxygen/ammonia) needs to be less than 0.75. Also, from the viewpoint of balancing the amount of hydrogen obtained by ammonia decomposition with combustion heat by the combustion reaction, the molar ratio (oxygen/ammonia) is preferably 0.05 or larger, more preferably 0.1 or larger, and further preferably 0.12 or larger, and preferably 0.5 or smaller and more preferably 0.3 or smaller.

Even when water vapor is contained in a source gas, the catalyst for decomposing ammonia of the present invention effectively shows catalytic action without getting much reaction inhibitory effect. Therefore, it is also a preferable embodiment to produce hydrogen by decomposing ammonia in an ammonia-containing gas in coexistence with water vapor. In the case, a reaction gas (source gas) is preferably a gas containing 1 to 40% by volume of water vapor, 1 to 99% by volume of ammonia, 0 to 50% by volume of hydrogen, and nitrogen (the total volume of water vapor, ammonia, hydrogen and nitrogen is 100% by volume). In the reaction gas (source gas), ammonia is present in an amount of 1 to 99% by volume and preferably 5 to 98% by volume, and water vapor is present in an amount of 1 to 40% by volume and preferably 2 to 30% by volume.

In the decomposition reaction of ammonia, the reaction temperature is from 300 to 900°C and preferably from 400 to 700°C, and the reaction pressure is from 0.002 to 2 MPa and preferably from 0.004 to 1 MPa. The space velocity when introducing a reaction gas (source gas) is from 1,000 to 500,000 $hr^{-1}$ and preferably from 1,000 to 200,000 $hr^{-1}$.

In addition, when using a catalyst, it can be also pretreated in advance. By pretreating in suitable treating conditions, the state of catalyst can be made close to the state during the reaction, and it is possible to drive in the steady reaction state from the beginning by subjecting to the pretreatment. An example of the pretreatment is to allow nitrogen gas to flow through a catalyst in the reaction conditions for a certain period of time.

EXAMPLES

The present invention will be described below more specifically by reference to examples, but the present invention is not limited to these examples, and can be put into practice after appropriate modifications within a range meeting both of the gist described above and below, all of which are included in the technical scope of the present invention.

<Production of First Catalyst>

Production Example 1

In 500 mL (milliliter) of pure water were dissolved 24.74 g of cobalt nitrate hexahydrate and 110.57 g of aluminum nitrate nonahydrate to prepare a mixed aqueous solution of cobalt nitrate and aluminum nitrate (aqueous solution A1). Separately, an aqueous solution B1 obtained by dissolving 101.2 g of ammonium carbonate in 1.5 L (liter) of pure water was prepared. The aqueous solution A1 was added at a time to the aqueous solution B1 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 650°C for 1 hour to obtain a catalyst 1. The cobalt content in the obtained catalyst 1 was 25% by mass. The specific surface area (S1) of the catalyst 1 measured by BET method using nitrogen gas was 241.3 $m^2/g$.

In addition, in order to calculate the calculated specific surface area (S2) of cobalt that is a component (A) of the catalyst 1, a powder 1 comprising only alumina that is a component (B) was prepared. Specifically, first, 105.0 g of aluminum nitrate nonahydrate was dissolved in 500 mL of pure water (aqueous solution a1). Separately, an aqueous solution obtained by dissolving 80.6 g of ammonium carbonate in 1.5 L of pure water was prepared (aqueous solution b1). The aqueous solution a1 was added at a time to the aqueous solution b1 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 650°C for 1 hour to obtain the powder 1 comprising only alumina that is the component (B) of the catalyst 1. The specific surface area of the powder 1 measured by BET method using nitrogen gas was 285.5 $m^2/g$.

Production Example 2

The same procedures were carried out as in Production Example 1 except for changing the use amounts of cobalt nitrate hexahydrate, aluminum nitrate nonahydrate and ammonium carbonate in Production Example 1 to 66.6 g, 48.9 g and 81.5 g to obtain a catalyst 2. The cobalt content of the obtained catalyst 2 was 67% by mass. The specific surface area (S1) of the catalyst 2 measured by BET method using nitrogen gas was 121.7 $m^2$/g.
In addition, in order to calculate the calculated specific surface area (S2) of cobalt that is a component (A) of the catalyst 2, a powder 2 comprising only alumina that is a component (B) was prepared in the same manner as in Production Example 1. The specific surface area of the powder 2 measured by BET method using nitrogen gas was 285.5 $m^2$/g.

Production Example 3

The same procedures were carried out as in Production Example 1 except for changing the use amounts of cobalt nitrate hexahydrate, aluminum nitrate nonahydrate and ammonium carbonate in Production Example 1 to 81.5 g, 28.1 g and 75.3 g to obtain a catalyst 3. The cobalt content of the obtained catalyst 3 was 81.2% by mass. The specific surface area (S1) of the catalyst 3 measured by BET method using nitrogen gas was 75.4 $m^2$/g.
In addition, in order to calculate the calculated specific surface area (S2) of cobalt that is a component (A) of the catalyst 3, a powder 3 comprising only alumina that is a component (B) was prepared in the same manner as in Production Example 1. The specific surface area of the powder 3 measured by BET method using nitrogen gas was 285.5 $m^2$/g.

Production Example 4

γ-alumina (manufactured by Sumitomo Chemical Co., Ltd.) powder dried at 150°C overnight was pulverized, and 5 g of the powder was added to 100 mL of pure water and dispersed by stirring. While vigorously stirring the pure water in which γ-alumina was dispersed, 99.2 g of cobalt nitrate hexahydrate was added little by little. Subsequently, the aqueous cobalt nitrate solution in which γ-alumina was dispersed was heated with stirring, and water was evaporated to obtain a dried matter. The obtained dried matter was further dried at 150°C overnight, then pulverized, packed in a tube furnace and reduced using 10% by volume of hydrogen gas (diluted with nitrogen) at 450°C for 1 hour to obtain a catalyst 4. The cobalt content of the obtained catalyst 4 was 80% by mass. The specific surface area (S1) of the catalyst 4 measured by BET method using nitrogen gas was 61.1 $m^2$/g.
In addition, in order to calculate the calculated specific surface area (S2) of cobalt that is a component (A) of the catalyst 4, γ-alumina (manufactured by Sumitomo Chemical Co., Ltd.) powder, that is a component (B), was pulverized, then the powder was packed in a tube furnace and reduced using 10% by volume of hydrogen gas (diluted with nitrogen) at 450°C for 1 hour to obtain a powder 4 comprising γ-alumina. The specific surface area of the powder 4 measured by BET method using nitrogen gas was 291.4 $m^2$/g.

Production Example 5

In 500 mL of pure water were dissolved 29.1 g of cobalt nitrate hexahydrate and 102.4 g of magnesium nitrate hexahydrate to prepare a mixed aqueous solution of cobalt nitrate and magnesium nitrate (aqueous solution A2). Separately, an aqueous solution B2 obtained by dissolving 140.1 g of potassium hydrate in 2 L of pure water was prepared. The aqueous solution A2 was delivered by drops into the aqueous solution B2 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 5. The cobalt content in the obtained catalyst 5 was 26.8% by mass. The specific surface area (S1) of the catalyst 5 measured by BET method using nitrogen gas was 188.3 $m^2$/g.
In addition, in order to calculate the calculated specific surface area (S2) of cobalt that is a component (A) of the catalyst 5, a powder 5 comprising only magnesia that is a component (B) was prepared. Specifically, first, 102.6 g of magnesium nitrate hexahydrate was dissolved in 500 mL of pure water (aqueous solution a2). Separately, an aqueous solution obtained by dissolving 112.2 g of potassium hydrate in 2 L of pure water was prepared (aqueous solution b2). The aqueous solution a2 was delivered by drops into the aqueous solution b2 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 450°C for 1 hour to obtain the powder 5 comprising only magnesia. The specific surface area of the powder 5 measured by BET method using nitrogen gas was 173.7 $m^2$/g.

Production Example 6

The same procedures were carried out as in Production Example 5 except for changing the use amounts of cobalt nitrate hexahydrate, magnesium nitrate hexahydrate and potassium hydrate in Production Example 5 to 53.8 g, 62.2 g and 120.0 g to obtain a catalyst 6. The cobalt content of the obtained catalyst 6 was 52.7% by mass. The specific surface area (S1) of the catalyst 6 measured by BET method using nitrogen gas was 158.1 $m^2/g$.
In addition, in order to calculate the calculated specific surface area (S2) of cobalt that is a component (A) of the catalyst 6, a powder 6 comprising only magnesia that is a component (B) was prepared in the same manner as in Production Example 5. The specific surface area of the powder 6 measured by BET method using nitrogen gas was 173.7 $m^2/g$.

Production Example 7

The same procedures were carried out as in Production Example 5 except for changing the use amounts of cobalt nitrate hexahydrate, magnesium nitrate hexahydrate and potassium hydrate in Production Example 5 to 72.8 g, 35.0 g and 108.4 g to obtain a catalyst 7. The cobalt content of the obtained catalyst 7 was 72.8% by mass. The specific surface area (S1) of the catalyst 7 measured by BET method using nitrogen gas was 123.6 $m^2/g$.
In addition, in order to calculate the calculated specific surface area (S2) of cobalt that is a component (A) of the catalyst 7, a powder 7 comprising only magnesia that is a component (B) was prepared in the same manner as in Production Example 5. The specific surface area of the powder 7 measured by BET method using nitrogen gas was 173.7 $m^2/g$.

Production Example 8

Basic magnesium carbonate (manufactured by Wako Pure Chemical Industries, Ltd.) was calcined at 750°C for 2 hours to prepare magnesia. 5 g of the magnesia powder was added to 100 mL of pure water and dispersed by stirring. While vigorously stirring the pure water in which magnesia was dispersed, 74.4 g of cobalt nitrate hexahydrate was added little by little. Subsequently, the aqueous cobalt nitrate solution in which magnesia was dispersed was heated with stirring, and water was evaporated to obtain a dried matter. The obtained dried matter was further dried at 150°C overnight, then pulverized, packed in a tube furnace and reduced using 10% by volume of hydrogen gas (diluted with nitrogen) at 450°C for 1 hour to obtain a catalyst 8. The cobalt content of the obtained catalyst 8 was 60% by mass. The specific surface area (S1) of the catalyst 8 measured by BET method using nitrogen gas was 84.4 $m^2/g$.
In addition, in order to calculate the calculated specific surface area (S2) of cobalt that is a component (A) of the catalyst 8, a powder 8 comprising only magnesia that is a component (B) was prepared. Specifically, basic magnesium carbonate (manufactured by Wako Pure Chemical Industries, Ltd.) was calcined at 750°C for 2 hours to prepare magnesia, and the magnesia powder was pulverized, then the powder was packed in a tube furnace and reduced using 10% by volume of hydrogen gas (diluted with nitrogen) at 450°C for 1 hour to obtain a powder 8 comprising only magnesia. The specific surface area of the powder 8 measured by BET method using nitrogen gas was 56.3 $m^2/g$.

Production Example 9

In 500 mL of pure water were dissolved 81.4 g of nickel nitrate hexahydrate and 23.4 g of aluminum nitrate nonahydrate to prepare a mixed aqueous solution of nickel nitrate and aluminum nitrate (aqueous solution A3). Separately, an aqueous solution B3 obtained by dissolving 327 g of 25% by mass aqueous tetramethylammonium hydroxide in 1.5 L of pure water was prepared. The aqueous solution A3 was added at a time to the aqueous solution B3 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 9. The nickel content in the obtained catalyst 9 was 83.8% by mass. The specific surface area (S1) of the catalyst 9 measured by BET method using nitrogen gas was 177.5 $m^2/g$.
In addition, in order to calculate the calculated specific surface area (S2) of nickel that is a component (A) of the catalyst 9, a powder 9 comprising only alumina that is a component (B) was prepared. Specifically, first, 93.8 g of aluminum nitrate nonahydrate was dissolved in 500 mL of pure water (aqueous solution a3). Separately, an aqueous solution obtained by dissolving 684 g of 25% by mass aqueous tetramethylammonium hydroxide in 1.5 L of pure water was prepared (aqueous solution b3). The aqueous solution a3 was added at a time to the aqueous solution b3 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain the powder 9 comprising only alumina. The specific surface area of the powder 9 measured by BET method using nitrogen gas was 341.7 $m^2/g$.

Production Example 10

In 500 mL of pure water were dissolved 61.1 g of cobalt nitrate hexahydrate and 53.8 g of magnesium nitrate hexahydrate to prepare a mixed aqueous solution of cobalt nitrate and magnesium nitrate (aqueous solution A4). Separately, an aqueous solution B4 obtained by dissolving 118 g of potassium hydrate in 1.5 L of pure water was prepared. The aqueous solution A4 was delivered by drops into the aqueous solution B4 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 10. The cobalt content in the obtained catalyst 10 was 59.3% by mass. The specific surface area (S1) of the catalyst 10 measured by BET method using nitrogen gas was 118.5 $m^2/g$.
In addition, in order to calculate the calculated specific surface area (S2) of cobalt that is a component (A) of the catalyst 10, a powder 10 comprising only magnesia that is a component (B) was prepared. Specifically, first, 102.6 g of magnesium nitrate hexahydrate was dissolved in 500 mL of pure water (aqueous solution a4). Separately, an aqueous solution obtained by dissolving 112.2 g of potassium hydrate in 2 L of pure water was prepared (aqueous solution b4). The aqueous solution a4 was delivered by drops into the aqueous solution b4 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 650°C for 1 hour to obtain the powder 10 comprising only magnesia that is the component (B) of the catalyst 10. The specific surface area of the powder 10 measured by BET method using nitrogen gas was 58.2 $m^2/g$.

Production Example 11

In 500 mL of pure water were dissolved 66.9 g of cobalt nitrate hexahydrate, 15.4 g of cerium nitrate hexahydrate, and 2.37 g of zirconium oxynitrate to prepare a mixed aqueous solution of cobalt nitrate, cerium nitrate, and zirconium oxynitrate (aqueous solution A5). Separately, an aqueous solution B5 obtained by dissolving 56.1 g of ammonium carbonate in 1.5 L of pure water was prepared. The aqueous solution A5 was added at a time to the aqueous solution B5 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 11. The cobalt content in the obtained catalyst 11 was 64.1% by mass. The specific surface area (S1) of the catalyst 11 measured by BET method using nitrogen gas was 75.7 $m^2/g$.
In addition, in order to calculate the calculated specific surface area (S2) of cobalt that is a component (A) of the catalyst 11, a powder 11 comprising only ceria and zirconia that is a component (B) was prepared. Specifically, first, 17.4 g of cerium nitrate hexahydrate and 2.67 g of zirconium oxynitrate was dissolved in 500 mL of pure water to prepare a mixed aqueous solution of cerium nitrate and zirconium oxynitrate (aqueous solution a5). Separately, an aqueous solution b5 obtained by dissolving 13.4 g of ammonium carbonate in 1.5 L of pure water was prepared. The aqueous solution a5 was added at a time to the aqueous solution b5 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain the powder 11 comprising only ceria and zirconia. The specific surface area of the powder 11 measured by BET method using nitrogen gas was 145.1 $m^2/g$.

Production Example 12

In 1 L of pure water was dissolved 49.5 g of cobalt nitrate hexahydrate (aqueous solution A6). Separately, an aqueous solution B6 obtained by adding 14.24 g of SNOWTEX (registered trademark) N (silica sol manufactured by Nissan Chemical Industries, Ltd.: containing 20.3% by mass of silica) to an ammonia water diluted to 300 mL by adding pure water to 25.6 mL of 25% by mass ammonia water was prepared, and the aqueous solution B6 was delivered by drops into the aqueous solution A6 to produce a precipitate. The precipitate was filtered and sufficiently washed with water, and then dried at 150°C overnight. The dried precipitate was pulverized, packed in a tube furnace and reduced using 10% by volume of hydrogen gas (diluted with nitrogen) at 450°C for 1 hour to obtain a catalyst 12. The cobalt content of the obtained catalyst 12 was 77.6% by mass. The specific surface area (S1) of the catalyst 12 measured by BET method using nitrogen gas was 118.2 $m^2/g$.
In addition, in order to calculate the calculated specific surface area (S2) of cobalt that is a component (A) of the catalyst 12, a powder 12 comprising only silica that is a component (B) was prepared. Specifically, SNOWTEX N (silica sol manufactured by Nissan Chemical Industries, Ltd.: containing 20.3% by mass of silica) was weighed out in a 50 g glass beaker and dried at 150°C overnight. The solid matter obtained by drying was pulverized, packed in a tube furnace and reduced using 10% by volume of hydrogen gas (diluted with nitrogen) at 450°C for 1 hour to obtain the powder 12 comprising only silica. The specific surface area of the powder 12 measured by BET method using nitrogen gas was 220.8 $m^2$/g.

Production Example 13

In 1 L of pure water was dissolved 39.4 g of cobalt nitrate hexahydrate and 27.3 g of aluminum nitrate nonahydrate (aqueous solution A7). Separately, an aqueous solution B7 obtained by adding 21.5 g of SNOWTEX N (silica sol manufactured by Nissan Chemical Industries, Ltd.: containing 20.3% by mass of silica) to an ammonia water diluted to 300 mL by adding pure water to 34.5 mL of 25% by mass ammonia water was prepared, and the aqueous solution B7 was delivered by drops into the aqueous solution A7 to produce a precipitate. The precipitate was filtered and sufficiently washed with water, and then dried at 150°C overnight. The dried precipitate was pulverized, packed in a tube furnace and reduced using 10% by volume of hydrogen gas (diluted with nitrogen) at 450°C for 1 hour to obtain a catalyst 13. The cobalt content of the obtained catalyst 13 was 46.7% by mass. The specific surface area (S1) of the catalyst 13 measured by BET method using nitrogen gas was 122.8 $m^2$/g.
In addition, in order to calculate the calculated specific surface area (S2) of cobalt that is a component (A) of the catalyst 13, a powder 13 comprising only silica and alumina that is a component (B) was prepared. In 1 L of pure water was dissolved 37.5 g of aluminum nitrate nonahydrate (aqueous solution a7). Separately, an aqueous solution b7 obtained by adding 29.6 g of SNOWTEX N (silica sol manufactured by Nissan Chemical Industries, Ltd.: containing 20.3% by mass of silica) to an ammonia water diluted to 300 mL by adding pure water to 22.6 mL of 25% by mass ammonia water was prepared, and the aqueous solution b7 was delivered by drops into the aqueous solution a7 to produce a precipitate. The precipitate was filtered and sufficiently washed with water, and then dried at 150°C overnight. The solid matter obtained by drying was pulverized, packed in a tube furnace and reduced using 10% by volume of hydrogen gas (diluted with nitrogen) at 450°C for 1 hour to obtain the powder 13 comprising only silica and alumina. The specific surface area of the powder 13 measured by BET method using nitrogen gas was 150.8 $m^2$/g.

Production Example 14

$\gamma$-alumina (manufactured by Strem Chemicals Inc.) powder dried at 150°C overnight was pulverized, and an aqueous solution in which 24.8 g of nickel nitrate hexahydrate was dissolved in 50 mL of pure water was added to 20 g of the powder, and water was evaporated by heating with stirring to obtain a dried matter. The obtained dried matter was further dried at 150°C overnight, then pulverized, packed in a tube furnace and reduced using 10% by volume of hydrogen gas (diluted with nitrogen) at 450°C for 1 hour to obtain a catalyst 14. The nickel content of the obtained catalyst 14 was 20% by mass. The specific surface area (S1) of the catalyst 14 measured by BET method using nitrogen gas was 157.4 $m^2$/g.
In addition, in order to calculate the calculated specific surface area (S2) of nickel that is a component (A) of the catalyst 14, $\gamma$-alumina (manufactured by Strem Chemicals Inc.) powder, that is a component (B), was pulverized, then the powder was packed in a tube furnace and reduced using 10% by volume of hydrogen gas (diluted with nitrogen) at 450°C for 1 hour to obtain a powder 14 comprising $\gamma$-alumina. The specific surface area of the powder 14 measured by BET method using nitrogen gas was 187.1 $m^2$/g.

Production Example 15

In 750 mL of pure water were dissolved 100 g of cobalt nitrate hexahydrate and 73.4 g of aluminum nitrate nonahydrate to prepare a mixed aqueous solution of cobalt nitrate and aluminum nitrate (aqueous solution A8). Separately, an aqueous solution B8 obtained by dissolving 122 g of ammonium carbonate in 2.25 L of pure water was prepared. The aqueous solution A8 was added at a time to the aqueous solution B8 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 650°C for 1 hour to obtain a catalyst 15. The cobalt content in the obtained catalyst 15 was 67% by mass in metal equivalent based on the total amount of the catalyst.

Production Example 16

The same procedures were carried out as in Production Example 15 except for changing the use amounts of cobalt nitrate hexahydrate, aluminum nitrate nonahydrate and ammonium carbonate in Production Example 15 to 122 g, 42.2 g and 113 g to obtain a catalyst 16. The cobalt content of the obtained catalyst 16 was 81% by mass in metal equivalent based on the total amount of the catalyst.

Production Example 17

In 600 mL of pure water were dissolved 87.4 g of cobalt nitrate hexahydrate and 42.0 g of magnesium nitrate hexahydrate to prepare a mixed aqueous solution of cobalt nitrate and magnesium nitrate (aqueous solution A9). Separately, an aqueous solution B9 obtained by dissolving 130 g of potassium hydrate in 2.4 L of pure water was prepared. The aqueous solution A9 was delivered by drops into the aqueous solution B9 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 17. The cobalt content in the obtained catalyst 17 was 73% by mass in metal equivalent based on the total amount of the catalyst.

Production Example 18

γ-alumina (manufactured by Sumitomo Chemical Co., Ltd.) powder was calcined at 950°C for 10 hours under air atmosphere and then pulverized. The crystal phase of alumina was transitioned from γ phase to κ phase by the heat treatment. An aqueous solution in which 11.0 g of cobalt nitrate hexahydrate was dissolved in 50 mL of pure water was added to 20 g of the heat-treated alumina powder, and water was evaporated by heating with stirring to obtain a dried matter. The obtained dried matter was further dried at 150°C overnight, then pulverized, packed in a tube furnace and reduced using 10% by volume of hydrogen gas (diluted with nitrogen) at 450°C for 1 hour to obtain a catalyst 18. The cobalt content of the obtained catalyst 18 was 10% by mass in metal equivalent based on the total amount of the catalyst.

Production Example 19

γ-alumina (manufactured by Strem Chemicals Inc.) powder dried at 150°C overnight was pulverized, and an aqueous solution in which 24.8 g of nickel nitrate hexahydrate was dissolved in 50 mL of pure water was added to 20 g of the pulverized powder, and water was evaporated by heating with stirring to obtain a dried matter. The obtained dried matter was further dried at 150°C overnight, then pulverized, packed in a tube furnace and reduced using 10% by volume of hydrogen gas (diluted with nitrogen) at 450°C for 1 hour to obtain a catalyst 19. The nickel content of the obtained catalyst 19 was 20% by mass in metal equivalent based on the total amount of the catalyst.

Production Example 20

In 500 mL of pure water were dissolved 34.9 g of nickel nitrate hexahydrate and 25.7 g of aluminum nitrate nonahydrate to prepare a mixed aqueous solution of nickel nitrate and aluminum nitrate (aqueous solution A10). Separately, an aqueous solution B10 obtained by dissolving 42.7 g of ammonium carbonate in 1L of pure water was prepared. The aqueous solution A10 was delivered by drops into the aqueous solution B10 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 650°C for 1 hour to obtain a catalyst 20 comprising nickel and alumina. The nickel content in the obtained catalyst 20 was 67% by mass, and the alumina content in the obtained catalyst 20 was 33% by mass.

Production Example 21

In 500 mL of pure water were dissolved 81.4 g of nickel nitrate hexahydrate and 23.4 g of aluminum nitrate nonahydrate to prepare a mixed aqueous solution of nickel nitrate and aluminum nitrate (aqueous solution A11). Separately, an aqueous solution B11 obtained by dissolving 327 g of 25% by mass aqueous tetramethylammonium hydroxide in 1.5 L of pure water was prepared. The aqueous solution All was added at a time to the aqueous solution B11 vigorously stirred at ordinary temperature, and the mixture was continuously stirred to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 21 comprising nickel and alumina. The nickel content in the obtained catalyst 21 was 84% by mass, and the alumina content in the obtained catalyst 21 was 16% by mass.

Production Example 22

In 500 mL of pure water were dissolved 34.9 g of nickel nitrate hexahydrate and 21.8 g of magnesium nitrate hexahydrate to prepare a mixed aqueous solution of nickel nitrate and magnesium nitrate (aqueous solution A12). Separately, an aqueous solution B12 obtained by dissolving 57.6 g of potassium hydrate in 1.0 L of pure water was prepared. The aqueous solution A12 was delivered by drops into the aqueous solution B12 vigorously stirred at ordinary temperature to produce a precipitate. Then, the precipitate was collected by filtration, sufficiently washed with water, and dried at 150°C overnight. And the dried precipitate was calcined at 650°C for 3 hours in a calcining furnace. The solid after calcining was pulverized, packed in a tube furnace and reduced using 10% by volume of hydrogen gas (diluted with nitrogen) at 650°C for 1 hour to obtain a catalyst 22 comprising nickel and magnesia. The nickel content in the obtained catalyst 22 was 67% by mass, and the magnesia content in the obtained catalyst 22 was 33% by mass.

Production Example 23

In 500 mL of pure water were dissolved 23.3 g of nickel nitrate hexahydrate, 25.0 g of aluminum nitrate nonahydrate, and 7.6 g of lanthanum nitrate hexahydrate to prepare a mixed aqueous solution of nickel nitrate, aluminum nitrate, and lanthanum nitrate (aqueous solution A13). Separately, an aqueous solution B13 obtained by dissolving 39.6 g of ammonium carbonate in 1.0L of pure water was prepared. The aqueous solution A13 was added at a time to the aqueous solution B13 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 650°C for 1 hour to obtain a catalyst 23 comprising nickel, alumina, and lanthanum oxide. The nickel content, the alumina content, and the lanthanum oxide content in the obtained catalyst 23 was 43% by mass, 31% by mass, and 26% by mass, respectively.

Production Example 24

In 720 mL of pure water were dissolved 52.5 g of nickel nitrate hexahydrate, 3.1 g of lanthanum nitrate hexahydrate and 14.19 g of Zircosol (registered trademark) ZN (an aqueous zirconium oxynitrate solution, manufactured by Daiichi Kigenso Kagaku Kogyo Co., Ltd.; containing 25% by mass as zirconium oxide), to prepare a mixed aqueous solution of nickel nitrate, lanthanum nitrate, and zirconium oxynitrate (aqueous solution A14). Separately, an aqueous solution B14 obtained by dissolving 63.0 g of potassium carbonate in 360mL of pure water was prepared. The aqueous solution A14 was delivered by drops into the aqueous solution B14 vigorously stirred at ordinary temperature to produce a precipitate. Then, the precipitate was collected by filtration, washed with water, and dried at 110°C. The dried precipitate was pulverized, calcined at 600°C for 3 hours to obtain nickel, lanthanum oxide ,and zirconia.
Further, the oxide was packed in a tube furnace and reduced using 10% by volume of hydrogen gas (diluted with nitrogen) at 600°C for 1 hour to obtain a catalyst 24. The specific surface area of the catalyst 24 measured by BET method using nitrogen gas was 84.5 m$^2$/g. The nickel content of the obtained catalyst 24 was 74% by mass.

In addition, in order to calculate the calculated specific surface area (S2) of nickel of the catalyst 24, a powder 15 comprising only lanthanum oxide ,and zirconia that is added material. Specifically, first, 4.3 g of lanthanum nitrate hexahydrate and 19.7 g of Zircosol ZN was dissolved in 240 mL of pure water to prepare a mixed aqueous solution of lanthanum nitrate and zirconium oxynitrate (aqueous solution a14). Separately, an aqueous solution b14 obtained by dissolving 21.5 g of potassium carbonate in 120mL of pure water was prepared. The aqueous solution a14 was delivered by drops into the aqueous solution b14 vigorously stirred at ordinary temperature to produce a precipitate. Then, the precipitate was collected by filtration, washed with water, and dried at 110°C. The dried precipitate was pulverized, and calcined under nitrogen atmosphere at 600°C for 3 hours to obtain lanthanum oxide ,and zirconia. And the oxide was packed in a tube furnace and reduced using 10% by volume of hydrogen gas (diluted with nitrogen) at 600°C for 1 hour to obtain a powder 15. The specific surface area of the powder 15 measured by BET method using nitrogen gas was 108.8 m$^2$/g.

Production Example 25

In 500 mL of pure water were dissolved 99.0 g of cobalt nitrate hexahydrate (aqueous solution A15). Separately, an aqueous solution B15 obtained by dissolving 65.3 g of ammonium carbonate in 1.5 L of pure water was prepared. The aqueous solution A15 was added at a time to the aqueous solution B15 vigorously stirred at ordinary temperature, and the mixture was continuously stirred for further 1 hour to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain a catalyst 25. The cobalt content in the obtained catalyst 25 was100% by mass. The specific surface(S1) area of the catalyst 25 measured by BET method using nitrogen gas was 4.5 $m^2$/g.

Production Example 26

In 500 mL of pure water were dissolved 105.0 g of aluminum nitrate nonahydrate (aqueous solution A16). Separately, an aqueous solution B16 obtained by dissolving 80.6 g of ammonium carbonate in 1.5L of pure water was prepared. The aqueous solution A16 was delivered by drops into the aqueous solution B16 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 650°C for 1 hour to obtain a powder 16 comprising alumina (the component (B) of the catalyst 15 and the catalyst 16).

Production Example 27

In 500 mL of pure water were dissolved 102.6 g of magnesium nitrate hexahydrate (aqueous solution A17). Separately, an aqueous solution B17 obtained by dissolving 112.2 g of potassium hydrate in 2 L of pure water was prepared. The aqueous solution A17 was delivered by drops into the aqueous solution B17 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 450°C for 1 hour to obtain a powder 17 comprising magnesia (the component (B) of the catalyst 17).

Production Example 28

The heat-treated alumina powder prepared Production Example 18 in was packed in a tube furnace and reduced using 10% by volume of hydrogen gas (diluted with nitrogen) at 450°C for 1 hour to obtain a powder 18 comprising alumina (the component (B) of the catalyst 18).

Production Example 29

γ-alumina (manufactured by Strem Chemicals Inc.) used in Production Example 19 was pulverized, then the powder was packed in a tube furnace and reduced using 10% by volume of hydrogen gas (diluted with nitrogen) at 450°C for 1 hour to obtain a powder 19 comprising alumina (the component (B) of the catalyst 19).

Production Example 30

In 500 mL of pure water were dissolved 93.8 g of aluminum nitrate nonahydrate (aqueous solution A18). Separately, an aqueous solution B18 obtained by dissolving 684 g of 25% by mass aqueous tetramethylammonium hydroxide in 1.5 L of pure water was prepared. The aqueous solution A18 was added at a time to the aqueous solution B18 vigorously stirred at ordinary temperature to produce a precipitate. Then, the precipitate was collected by filtration, washed with water, and dried at 150°C overnight. The dried precipitate was pulverized, packed in a tube furnace and reduced using 10% by volume of hydrogen gas (diluted with nitrogen) at 450°C for 1 hour to obtain a powder 20 comprising alumina.

Production Example 31

In 500 mL of pure water were dissolved 102.6 g of magnesium nitrate hexahydrate (aqueous solution A19). Separately, an aqueous solution B19 obtained by dissolving 112.2 g of potassium hydrate in 2L of pure water was prepared. The aqueous solution A19 was delivered by drops into the aqueous solution B19 vigorously stirred at ordinary temperature to produce a precipitate. Then, the precipitate was collected by filtration, sufficiently washed with water, and dried at 150°C overnight. And the dried precipitate was calcined at 650°C for 3 hours in a calcining furnace. The solid after calcining was pulverized, packed in a tube furnace and reduced using 10% by volume of hydrogen gas (diluted with nitrogen) at 650°C for 1 hour to obtain a powder 21 comprising magnesia.

Production Example 32

In 500 mL of pure water were dissolved 25.0 g of aluminum nitrate nonahydrate and 7.6 g of lanthanum nitrate hexahydrate to prepare a mixed aqueous solution of lanthanum nitrate and aluminum nitrate (aqueous solution A20). Separately, an aqueous solution B20 obtained by dissolving 24.3 g of ammonium carbonate in 1.0L of pure water was prepared. The aqueous solution A20 was delivered by drops into the aqueous solution B20 vigorously stirred at ordinary temperature to produce a precipitate. Then, the precipitate was collected by filtration, sufficiently washed with water, and dried at 150°C overnight. The dried precipitate was pulverized, packed in a tube furnace and reduced using 10% by volume of hydrogen gas (diluted with nitrogen) at 650°C for 1 hour to obtain a powder 22 comprising alumina and lanthanum oxide.

<Method of Measuring Specific Surface Area of Catalyst>

The specific surface area of the catalyst was measured by BET method using nitrogen gas.

<Method of Calculating Calculated Specific Surface Area of Component (A)>

The calculated specific surface area (S2) of the component (A) was calculated by subtracting the specific surface area derived from the oxide of the component (B) from the specific surface area of the catalyst. The specific surface area derived from the oxide of the component (B) in the catalyst was obtained as follows. Specifically, the water-soluble salt of the component (B) used in each Production Example was dissolved in water, and the alkaline compound used in the Production Example was added thereto to prepare a precipitate of the component (B) (e.g., hydroxide). Thereafter, the precipitate of the component (B) (e.g., hydroxide) was filtered, washed with water, dried, and reduced in the same manner as in the preparation procedure of the catalyst in the Production Example to prepare an oxide of the component (B). For the obtained oxide, the specific surface area (S(b)) was measured by BET method using nitrogen gas. The specific surface area derived from the oxide of the component (B) in the catalyst was obtained by the following formula.

$$\text{Specific Surface Area Derived from Oxide of Component (B) in}$$

$$\text{Catalyst} = (\text{S(b)} \times \text{Mass Content of Oxide of Component (B) in Catalyst})$$

<Number Average Particle Size of Component A>

The number average particle size of the component A (cobalt particles (catalysts 15 to 18)) or nickel particles (catalyst 19) was measured from the result of observation by transmission electron microscope.

Table 1

| | | catalyst specific surface area (S1) (m$^2$/g) | specific surface area derived from oxide of the component (B) (Sb) (m$^2$/g) | kind of the component (A) (m$^2$/g) | average particle size of component (A) (nm) | content of component (A) (% by mass) | calculated specific surface area (S2) of the component (A) (m$^2$/g) | S2/S1 |
|---|---|---|---|---|---|---|---|---|
| Production Example 1 | catalyst 1 | 241.3 | 285.5 | Co | - | 25 | 27.2 | 0.11 |
| Production Example 2 | catalyst 2 | 121.7 | 285.5 | Co | - | 67 | 27.5 | 0.23 |
| Production Example 3 | catalyst 3 | 75.4 | 285.5 | Co | - | 81.2 | 21.7 | 0.29 |
| Production Example 4 | catalyst 4 | 61.1 | 291.4 | Co | - | 80 | 2.8 | 0.05 |

(continued)

| | | catalyst specific surface area (S1) (m²/g) | specific surface area derived from oxide of the component (B) (Sb) (m²/g) | kind of the component (A) (m²/g) | average particle size of component (A) (nm) | content of component (A) (% by mass) | calculated specific surface area (S2) of the component (A) (m²/g) | S2/S1 |
|---|---|---|---|---|---|---|---|---|
| Production Example 5 | catalyst 5 | 188.3 | 173.7 | Co | - | 26.8 | 61.2 | 0.33 |
| Production Example 6 | catalyst 6 | 158.1 | 173.7 | Co | - | 52.7 | 75.9 | 0.48 |
| Production Example 7 | catalyst 7 | 123.6 | 173.7 | Co | - | 72.8 | 76.4 | 0.62 |
| Production Example 8 | catalyst 8 | 84.4 | 56.3 | Co | - | 60 | 61.9 | 0.73 |
| Production Example 9 | catalyst 9 | 177.5 | 341.7 | Ni | - | 83.8 | 122.1 | 0.69 |
| Production Example 10 | catalyst 10 | 118.5 | 58.2 | Ni | - | 59.3 | 94.8 | 0.8 |
| Production Example 11 | catalyst 11 | 75.7 | 145.1 | Co | - | 64.1 | 23.6 | 0.31 |
| Production Example 12 | catalyst 12 | 118.2 | 220.8 | Co | - | 77.6 | 68.7 | 0.58 |
| Production Example 13 | catalyst 13 | 122.8 | 150.8 | Co | - | 46.7 | 42.4 | 0.35 |
| Production Example 14 | catalyst 14 | 157.4 | 187.1 | Ni | - | 20 | 7.7 | 0.05 |
| Production Example 15 | catalyst 15 | 121.7 | - | Co | 22 | 67 | 27.5 | 0.23 |
| Production Example 16 | catalyst 16 | 75.4 | - | Co | 50 | 81 | 21.7 | 0.29 |
| Production Example 17 | catalyst 17 | 123.6 | - | Co | 11 | 73 | 76.5 | 0.62 |
| Production Example 18 | catalyst 18 | 53.6 | - | Co | 4 | 10 | 1 | 0.02 |
| Production Example 19 | catalyst 19 | 157.4 | - | Ni | 4 | 20 | 7.7 | 0.05 |
| Production Example 20 | catalyst 20 | 222 | - | Ni | - | 67 | 128 | 0.58 |
| Production Example 21 | catalyst 21 | 178 | - | Ni | - | 84 | 122 | 0.69 |
| Production Example 22 | catalyst 22 | 39.6 | - | Ni | - | 67 | 20.4 | 0.52 |
| Production Example 23 | catalyst 23 | 172 | - | Ni | - | 43 | 82 | 0.48 |

(continued)

| | | catalyst specific surface area (S1) (m²/g) | specific surface area derived from oxide of the component (B) (Sb) (m²/g) | kind of the component (A) (m²/g) | average particle size of component (A) (nm) | content of component (A) (% by mass) | calculated specific surface area (S2) of the component (A) (m²/g) | S2/S1 |
|---|---|---|---|---|---|---|---|---|
| Production Example 24 | catalyst 24 | 84.5 | - | Ni | - | 74 | 56.2 | 0.67 |
| Production Example 25 | catalyst 25 | 4.5 | - | Co | - | 100 | - | - |
| Production Example 26 | powder 16 | 285.5 | - | - | - | - | - | - |
| Production Example 27 | powder 17 | 173.3 | - | - | - | - | - | - |
| Production Example 28 | powder 18 | 187.1 | - | - | - | - | - | - |
| Production Example 29 | powder 19 | 58.4 | - | - | - | - | - | - |
| Production Example 30 | pow der 20 | 342 | - | - | - | - | - | - |
| Production Example 31 | powder 21 | 58.2 | - | - | - | - | - | - |
| Production Example 32 | powder 22 | 158 | - | - | - | - | - | - |

<Ammonia Decomposition Reaction Test>

Using a 10 mmφ reaction tube made of SUS 316, 0.8 mL of each of the catalysts 15 to 19 prepared in the Production Examples was packed, and ammonia decomposition reaction was performed. Under ordinary pressure, at an SV of 18,000 hr⁻¹, the reaction tube was heated in an electric furnace, and the ammonia decomposition rate at the set temperature of each electric furnace was measured. The inlet gas composition fed to the catalyst was 58.3% by volume of ammonia and the remainder being nitrogen.
The ammonia decomposition rate was calculated by the following formula from flow rate V1 of the ammonia fed to the inlet, flow rate V2 of the nitrogen and flow rate V3 of the gas after trapping an unreacted ammonia contained in an outlet gas of a catalyst layer. Incidentally, as a pretreatment of the catalyst, the catalyst was reduced at 450°C for 1 hour while flowing 10% by volume of hydrogen diluted with nitrogen at 100 ml per minute, and then ammonia decomposition reaction was performed. The reaction result is shown in Table 2.

$$\text{Ammonia Decomposition Rate (\%)} = 100 \times (V3 - V2) \times 0.5/V1$$

Table2

| | catalyst | NH₃ decomposition rate (%) | | | | |
|---|---|---|---|---|---|---|
| | | 450°C | 500°C | 550°C | 600°C | 650°C |
| Production Example 15 | catalyst 15 | 13.6 | 32.1 | 61.4 | 93 | 100 |

(continued)

| | catalyst | NH$_3$ decomposition rate (%) | | | | |
|---|---|---|---|---|---|---|
| | | 450°C | 500°C | 550°C | 600°C | 650°C |
| Production Example 16 | catalyst 16 | 20.1 | 40 | 72.7 | 99.6 | 100 |
| Production Example 17 | catalyst 17 | 29.6 | 58.2 | 91.3 | 100 | - |
| Production Example 18 | catalyst 18 | - | - | 35.4 | 70.2 | 94.2 |
| Production Example 19 | catalyst 19 | - | - | 37.3 | 73.2 | 96.2 |

<Ammonia Decomposition Reaction in Coexistence with Water Vapor>

Using a 10 mm$\phi$ reaction tube made of SUS 316, 0.8 mL of each of the catalysts 1 to 14 and 19 to 25 prepared in the Production Examples was packed, and ammonia decomposition reaction in coexistence with water vapor was performed. Under ordinary pressure, at an SV of 21,000 hr$^{-1}$, the reaction tube was heated in an electric furnace, and the ammonia decomposition rate at the set temperature of each electric furnace was measured. The ammonia decomposition reaction was performed with an inlet gas composition fed to the catalyst of 48.3% by volume of ammonia, 17.3% by volume of water vapor, and the remainder being nitrogen.
The ammonia decomposition rate was calculated by the following formula from flow rate V1 of the ammonia fed to the inlet, flow rate V2 of the nitrogen and flow rate V3 of the gas after trapping water vapor and an unreacted ammonia contained in an outlet gas of a catalyst layer. Incidentally, as a pretreatment of the catalyst, the catalyst was reduced at 450°C for 1 hour while flowing 10% by volume of hydrogen diluted with nitrogen at 100 ml per minute, and then ammonia decomposition reaction in coexistence with water vapor was performed. The reaction result is shown in Table 3.

$$\text{Ammonia Decomposition Rate (\%)} = 100 \times (V3 - V2) \times 0.5/V1$$

Table3

| | catalyst | NH$_3$ decomposition rate (%) | | | | | |
|---|---|---|---|---|---|---|---|
| | | 450°C | 500°C | 550°C | 600°C | 650°C | 700°C |
| Production Example 1 | catalyst 1 | 9.4 | 18.5 | 32 | 48.2 | 67.2 | 95.8 |
| Production Example 2 | catalyst 2 | 17.8 | 33.5 | 55.9 | 81.8 | 100 | - |
| Production Example 3 | catalyst 3 | 24.2 | 44.1 | 70 | 95.1 | 100 | - |
| Production Example 4 | catalyst 4 | 12.6 | 27.7 | 48.9 | 74.5 | 96.4 | 100 |
| Production Example 5 | catalyst 5 | 12.1 | 25.4 | 46.1 | 71.7 | 93.2 | 100 |
| Production Example 6 | catalyst 6 | 22 | 43.3 | 68.3 | 90.8 | 100 | - |
| Production Example 7 | catalyst 7 | 29.5 | 51.4 | 76.2 | 94.5 | 98.5 | - |
| Production Example 8 | catalyst 8 | 15.3 | 31.2 | 52.3 | 79.7 | 98.2 | - |
| Production Example 9 | catalyst 9 | 16.6 | 33.2 | 56 | 81.6 | 97.9 | 100 |
| Production Example 10 | catalyst 10 | - | 21 | 42.1 | 66.7 | 89.4 | 100 |
| Production Example 11 | catalyst 11 | 26.2 | 46.1 | 71.1 | 97 | 100 | - |
| Production Example 12 | catalyst 12 | 20.2 | 39.8 | 64.5 | 88.1 | 100 | - |
| Production Example 13 | catalyst 13 | 19.2 | 38.1 | 62.5 | 88.1 | 100 | - |
| Production Example 14 | catalyst 14 | - | - | 23.1 | 45.3 | 69.1 | 86.2 |
| Production Example 19 | catalyst 19 | - | - | 23 | 45 | 69 | - |
| Production Example 20 | catalyst 20 | - | - | 53 | 80 | 96 | - |

(continued)

| | catalyst | NH$_3$ decomposition rate (%) | | | | | |
|---|---|---|---|---|---|---|---|
| | | 450°C | 500°C | 550°C | 600°C | 650°C | 700°C |
| Production Example 21 | catalyst 21 | - | - | 56 | 82 | 98 | - |
| Production Example 22 | catalyst 22 | - | - | 45 | 73 | 94 | - |
| Production Example 23 | catalyst 23 | - | - | 33 | 61 | 90 | - |
| Production Example 24 | catalyst 24 | 22.4 | 40.0 | 71.5 | 92.0 | 100.0 | - |
| Production Example 25 | catalyst 25 | 1.5 | 4.1 | 10.2 | 22.5 | 49.1 | - |

<Ammonia Decomposition Reaction in Coexistence with Oxygen>

Using a 10 mm$\phi$ reaction tube made of SUS 316, 0.8 mL of each of the catalysts 2, 11, 14, 15, 19, and 22 prepared in the Production Examples was packed, the reaction tube was heated in an electric furnace, and ammonia decomposition reaction in coexistence with water vapor and oxygen was performed. The decomposition reaction was performed under ordinary pressure, and the space velocity (SV) of the reaction gas, the set temperature of electric furnace, and the inlet gas composition fed to the catalyst were set to the values shown in Table 4.
Flow rate F1 of the ammonia fed to the inlet and flow rate F2 of the ammonia in an outlet gas by trapping an unreacted ammonia contained in the outlet gas of the catalyst with a boric acid aqueous solution for a certain period of time, and quantitatively analyzing the concentration of ammonia contained in the trapped liquid by cation ion chromatography were determined, and the ammonia decomposition rate was calculated by the following formula. Incidentally, as a pretreatment of the catalyst, the catalyst was reduced at 450°C for 1 hour while flowing 10% by volume of hydrogen diluted with nitrogen at 100 ml per minute, and then ammonia decomposition reaction in coexistence with water vapor was performed. The reaction result is shown in Table 4.

$$\text{Ammonia Decomposition Rate (\%)} = 100 - \{100 \times (F2/F1)\}$$

Table 4

| | catalyst | SV (hr$^{-1}$) | set temperature of electric furnace (°C) | inlet gas com position (% by volume) | | | | NH$_3$ decom position rate %) |
|---|---|---|---|---|---|---|---|---|
| | | | | ammonia | water vapor | oxygen | nitrogen | |
| Production Example 2 | catalyst 2 | 50000 | 150 | 48.4 | 17 | 7.2 | remainder | 45.5 |
| Production Example 11 | catalyst 11 | | | | | | | 52.3 |
| Production Example 14 | catalyst 14 | | | | | | | 3.3 |
| Production Example 15 | catalyst 15 | 18000 | 150 | 58 | - | 7.1 | remainder | 25.6 |
| Production Example 19 | catalyst 19 | | | | | | | 2.3 |
| Production Example 22 | catalyst 22 | 36000 | 350 | 29 | - | 4.9 | remainder | 48.2 |
| Production Example 19 | catalyst 19 | | | | | | | 27.6 |

<Production of Second Catalyst>

Production Example 33

In 830 mL (milliliter: hereinafter indicated as the same) of pure water was dissolved 43.7 g of cobalt nitrate hexahydrate (aqueous solution A21). Separately, an aqueous solution B21 obtained by adding 29.0 g of SNOWTEX N (silica sol manufactured by Nissan Chemical Industries, Ltd.: containing 20.3% by mass of silica) to an ammonia water diluted to 565 mL by adding pure water to 22.6 mL of 25% by mass ammonia water was prepared. In the state of vigorously stirring the aqueous solution A21 with a three-one motor while irradiating the aqueous solution A21 with ultrasonic wave at 25°C, the aqueous solution A21 was delivered by drops into the aqueous solution B21 irradiated with ultrasonic wave and vigorously stirred with three-one motor stirring to synthesize a fine precipitate. The precipitate was collected by filtration and sufficiently washed with water, and then dried at 120°C overnight. The dried precipitate was pulverized with an agate mortar, packed in a tube furnace and reduced using 10% by volume of hydrogen gas (diluted with nitrogen) at 450°C for 1 hour to obtain a catalyst 26. The cobalt content of the obtained catalyst 26 was 60% by mass.

Production Example 34

In 1106 mL of pure water was dissolved 58.2 g of cobalt nitrate hexahydrate (aqueous solution A22). Separately, an aqueous solution B22 obtained by adding 14.5 g of SNOWTEX N (silica sol manufactured by Nissan Chemical Industries, Ltd.: containing 20.3% by mass of silica) to an ammonia water diluted to 722 mL by adding pure water to 30.1 mL of 25% by mass ammonia water was prepared. In the state of vigorously stirring the aqueous solution A22 with a three-one motor while irradiating the aqueous solution A22 with ultrasonic wave at 25°C, the aqueous solution A22 was delivered by drops into the aqueous solution B22 irradiated with ultrasonic wave and vigorously stirred with three-one motor stirring to synthesize a fine precipitate. The precipitate was collected by filtration and sufficiently washed with water, and then dried at 120°C overnight. The dried precipitate was pulverized with an agate mortar, packed in a tube furnace and reduced using 10% by volume of hydrogen gas (diluted with nitrogen) at 450°C for 1 hour to obtain a catalyst 27. The cobalt content of the obtained catalyst 27 was 80% by mass.

Production Example 35

In 1326 mL of pure water was dissolved 34.9 g of cobalt nitrate hexahydrate and 23.9 g of aluminum nitrate nonahydrate (aqueous solution A23). Separately, an aqueous solution B23 obtained by adding 20.0 g of SNOWTEX N (silica sol manufactured by Nissan Chemical Industries, Ltd.: containing 20.3% by mass of silica) to an ammonia water diluted to 780 mL by adding pure water to 32.5 mL of 25% by mass ammonia water was prepared. In the state of vigorously stirring the aqueous solution A23 with a three-one motor while irradiating the aqueous solution A23 with ultrasonic wave at 25°C, the aqueous solution A23 was delivered by drops into the aqueous solution B23 irradiated with ultrasonic wave and vigorously stirred with three-one motor stirring to synthesize a fine precipitate. The precipitate was collected by filtration and sufficiently washed with water, and then dried at 120°C overnight. The dried precipitate was pulverized with an agate mortar, packed in a tube furnace and reduced using 10% by volume of hydrogen gas (diluted with nitrogen) at 450°C for 1 hour to obtain a catalyst 28. The cobalt content of the obtained catalyst 28 was 50% by mass.

Production Example 36

In 1881 mL of pure water was dissolved 49.5 g of cobalt nitrate hexahydrate and 14.5 g of aluminum nitrate nonahydrate (aqueous solution A24). Separately, an aqueous solution B24 obtained by adding 11.5 g of SNOWTEX N (silica sol manufactured by Nissan Chemical Industries, Ltd.: containing 20.3% by mass of silica) to an ammonia water diluted to 826 mL by adding pure water to 34.4 mL of 25% by mass ammonia water was prepared. In the state of vigorously stirring the aqueous solution A24 with a three-one motor while irradiating the aqueous solution A24 with ultrasonic wave at 25°C, the aqueous solution A24 was delivered by drops into the aqueous solution B24 irradiated with ultrasonic wave and vigorously stirred with three-one motor stirring to synthesize a fine precipitate. The precipitate was collected by filtration and sufficiently washed with water, and then dried at 120°C overnight. The dried precipitate was pulverized with an agate mortar, packed in a tube furnace and reduced using 10% by volume of hydrogen gas (diluted with nitrogen) at 450°C for 1 hour to obtain a catalyst 29. The cobalt content of the obtained catalyst 29 was 70% by mass.

Production Example 37

In pure water were dissolved 8.0 g of lanthanum nitrate hexahydrate and 22.2 g of cobalt nitrate hexahydrate to prepare 150ml of an aqueous solution. The solution was added to SNOWTEX O (silica sol manufactured by Nissan Chemical Industries, Ltd.: containing 20.5% by mass of silica), and was stirred sufficiently with a three-one motor. And the mixed aqueous solution was transferred to a magnetic plate, then was heated in an electric heater with dispersing to evaporate to dryness. The dry solid matter was further dried at 120°C overnight, then pulverized with an agate mortar, and calcined at 500°C for 2 hours under air atmosphere in a calcining furnace. Thereafter, the calcined product was packed in a tube furnace and reduced using 10% by volume of hydrogen gas (diluted with nitrogen) at 450°C for 1 hour to obtain a catalyst 30. The cobalt content of the obtained catalyst 30 was 30% by mass, and the lanthanum oxide content of the obtained catalyst 30 was 20% by mass.

Production Example 38

γ-alumina (manufactured by Strem Chemicals Inc.) powder dried at 150°C overnight was pulverized, and an aqueous solution in which 24.8 g of nickel nitrate hexahydrate was dissolved in 50 mL of pure water was added to 20 g of the powder, and water was evaporated by heating with stirring to obtain a dried matter. The obtained dried matter was further dried at 150°C overnight, then pulverized, packed in a tube furnace and reduced using 10% by volume of hydrogen gas (diluted with nitrogen) at 450°C for 1 hour to obtain a catalyst 31. The nickel content of the obtained catalyst 31 was 20% by mass.

In 500 g of pure water were dissolved 58.2 g of cobalt nitrate hexahydrate and 10.8 g of cerium nitrate hexahydrate, and was added to 10.3g of water-dispersible zirconia sol(manufactured by Nissan Chemical Industries, Ltd.: "NANOUSE(registered trademark) ZR-30AL": containing 30% by mass of zirconium oxide)) (aqueous solution A25). Separately, an aqueous solution B25 obtained by dissolving 74 g of potassium hydrate in 1.5L of pure water was prepared. In the state of vigorously stirring the aqueous solution B25 with a three-one motor while irradiating the aqueous solution B25 with ultrasonic wave at 25°C, the aqueous solution B25 was delivered by drops into the aqueous solution A25 irradiated with ultrasonic wave and vigorously stirred with three-one motor stirring to synthesize a fine precipitate. The precipitate was collected by filtration and sufficiently washed with water, and then dried at 120°C overnight. The dried precipitate was pulverized with an agate mortar, packed in a ring furnace and reduced using 10% by volume of hydrogen gas (diluted with nitrogen) at 450°C for 1 hour to obtain a catalyst 32. The cobalt content of the obtained catalyst 32 was 61.5% by mass.

<Evaluation of Uniformity>

(1) Each component analysis by EPMA

For the catalysts 26 to 32 obtained in Production Examples 33 to 39, the uniformity evaluation in the order of micron was performed by the following method.

| | |
|---|---|
| Analytical instrument: Corporation | "EPMA-1610" manufactured by Shimadzu |
| Analysis conditions | |
| Accelerating voltage: | 15 kV |
| Beam size: | 1 μm |
| Beam current: | 0.1 μA |
| Data point: | X-direction 450 Y-direction 450 |
| Step size: | X-direction 2 μm Y-direction 2 μm |
| Measurement area size: | X-direction 900 μm Y-direction 900 μm |

Analysis sample preparation: A sample formed into a film by pressing at a pressure of 10 MPa for 1 minute using a hydraulic press was cut, then attached on a specimen support and deposited with carbon, and x-ray count of each component in each point was measured.

(2) Uniformity evaluation in micron order

At a y-position arbitrarily selected from the obtained measurement results at x-direction of 900 μm and y-direction of 900 μm, the ratio ($\sigma$/S) of the average value (S) to the standard deviation ($\sigma$) of x-ray counts (450 points) of the component (A) in the x-direction was calculated, and was used as the index of the uniformity of the component (A). Herein, the average value (S) and the standard deviation ($\sigma$) were calculated by the following formula. The content of the component (A), the ratio ($\sigma$/S) of the average value (S) and the standard deviation ($\sigma$) calculated by the above method and the catalyst specific surface area measured by the BET one point method of each of the catalysts 26 to 32 were shown in Table 5.

$$\text{Average Value (S)} = (1/450) \times (\text{Summation of X-Ray Counts at 450 points})$$

$$\text{Math1}$$

$$\text{standard deviation } (\sigma) = \sqrt{\frac{1}{(450-1)} \times \sum_{i=1}^{450}(X_i - S)^2}$$

In the formula, x-ray count of the component (A) in each measurement position was represented by Xi.

Table5

| | | content of component (A) | ratio ($\sigma$/S) of component (A) | catalyst specific surface area |
|---|---|---|---|---|
| | | | | $m^2$/g |
| Production Example 33 | catalyst 26 | Co 60% by mass | 0.125 | 202 |
| Production Example 34 | catalyst 27 | Co 80% by mass | 0.063 | 140 |
| Production Example 35 | catalyst 28 | Co 50% by mass | 0.095 | 148 |
| Production Example 36 | catalyst 29 | Co 70% by mass | 0.048 | 185 |
| Production Example 37 | catalyst 30 | Co 30% by mass | 0.334 | 86 |
| Production Example 38 | catalyst 31 | Ni20% by mass | 0.115 | 157 |
| Production Example 39 | catalyst 32 | Co 61.5% by mass | 0.054 | 52 |

<Ammonia Decomposition Reaction in Coexistence with Water Vapor>

Using a 10 mm$\phi$ reaction tube made of SUS 316, 1.0 mL of each of the catalysts 26 to 32 prepared in the Production Examples was packed, and ammonia decomposition reaction was performed. Under ordinary pressure, at an SV of 18,000 hr$^{-1}$, the reaction tube was heated in an electric furnace, and the ammonia decomposition rate at the set temperature of each electric furnace was measured. The ammonia decomposition reaction was performed with an inlet gas composition fed to the catalyst of 50.0% by volume of ammonia, 15.0% by volume of water vapor, and the remainder being nitrogen. Incidentally, as a pretreatment of the catalyst, the catalyst was reduced at 450°C for 1 hour while flowing 10% by volume of hydrogen diluted with nitrogen at 100 ml per minute, and then ammonia decomposition reaction was performed. The reaction result is shown in Table 6.

The ammonia decomposition rate was calculated by the following formula from flow rate V1 of the ammonia fed to the inlet, flow rate V2 of the nitrogen and flow rate V3 of the gas after trapping water vapor and an unreacted ammonia contained in an outlet gas of a catalyst layer.

$$\text{Ammonia Decomposition Rate (\%)} = 100 \times (V3 - V2) \times 0.5/V1$$

Table6

| | | temperature (°C) | 461 | 501 | 538 | 576 | 620 |
|---|---|---|---|---|---|---|---|
| Production Example 33 | catalyst 26 | NH$_3$ decomposition rate (°%) | 17.7 | 34.8 | 57.3 | 80.4 | 96.1 |
| | | temperature (°C) | 459 | 500 | 538 | 577 | 633 |
| Production Example 34 | catalyst 27 | NH$_3$ decomposition rate (%) | 20.2 | 39.8 | 64.9 | 89.1 | 99.8 |
| | | temperature (°C) | 461 | 499 | 534 | 579 | 632 |
| Production Example 35 | catalyst 28 | NH$_3$ decom position rate (%) | 19.2 | 38.1 | 62.5 | 88 | 99.3 |
| | | temperature (°C) | 464 | 503 | 537 | 576 | 630 |
| Production Example 36 | catalyst 29 | NH$_3$ decomposition rate (%) | 18.5 | 36.1 | 58.7 | 84.9 | 97.2 |
| | | temperature (°C) | - | - | 550 | 593 | 645 |
| Production Example 37 | catalyst 30 | NH$_3$ decom position rate (%) | - | - | 46.0 | 67.0 | 89.0 |
| | | temperature (°C) | - | - | 548 | 602 | 655 |
| Production Example 38 | catalyst 31 | NH$_3$ decomposition rate (%) | - | - | 20.3 | 42.3 | 65.7 |
| | | temperature (°C) | 450 | 500 | 550 | 600 | 650 |
| Pruduction Example 39 | catalyst 32 | NH$_3$ decom position rate (%) | 27.2 | 46.1 | 71.5 | 97.0 | 100.0 |

<Ammonia Decomposition Reaction in Coexistence with Oxygen>

Using a 10 mmφ reaction tube made of SUS 316, 0.8 mL of each of the catalysts 26, 30 and 32 prepared in the Production example 33, 37, and 39. Under ordinary pressure, at an SV of 18,000 hr$^{-1}$, the reaction tube was heated in an electric furnace, and the ammonia decomposition rate at the set temperature 400°C of each electric furnace was measured. The ammonia decomposition reaction was performed with an inlet gas composition fed to the catalyst of 58.2% by volume of ammonia, 8.7% by volume of oxygen, and the remainder being nitrogen.
Flow rate F1 of the ammonia fed to the inlet and flow rate F2 of the ammonia in an outlet gas by trapping an unreacted ammonia contained in the outlet gas of the catalyst with a boric acid aqueous solution for a certain period of time, and quantitatively analyzing the concentration of ammonia contained in the trapped liquid by cation ion chromatography were determined, and the ammonia decomposition rate was calculated by the following formula. Incidentally, as a pretreatment of the catalyst, the catalyst was reduced at 450°C for 1 hour while flowing 10% by volume of hydrogen diluted with nitrogen at 100 ml per minute, and then ammonia decomposition reaction in coexistence with water vapor was performed. The reaction result is shown in Table 7.

$$\text{Ammonia Decomposition Rate (\%)} = 100 - \{100 \times (F2/F1)\}$$

Table 7

| | catalyst | NH$_3$ decom position rate (%) |
|---|---|---|
| | | 400°C |
| Production Example 33 | catalyst 26 | 48.6 |
| Production Example 37 | catalyst 30 | 27.8 |
| Production Example 39 | catalyst 32 | 51.0 |

INDUSTRIAL APPLICABILITY

The present invention relates to the decomposition of ammonia, and hydrogen can be effectively obtained from ammonia by using the present invention. The present invention can be widely applied to the techniques for producing hydrogen.

**Claims**

1.   A catalyst for decomposing ammonia, comprising
at least one element (component (A)) selected from the elements of groups 6 to 10 of the long-form periodic table, and an oxide and/or complex oxide of at least one element (component (B)) selected from the elements of groups 2 to 5 and groups 12 to 15 of the long-form periodic table,
wherein the calculated specific surface area (S2) of the component (A) is 20 m$^2$/g or larger, and
the ratio (S2/S1) of the calculated specific surface area (S2) of the component (A) to the specific surface area (S1) of the catalyst per se is 0.15 to 0.85.

2.   The catalyst for decomposing ammonia according to claim 1, wherein the oxide and/or complex oxide of the component (B) is an oxide and/or complex oxide of at least one element selected from the group consisting of alumina, silica, titania, hafnia, zirconia, zinc oxide, alkaline earth metal oxides, and lanthanoid metal oxides.

3.   The catalyst for decomposing ammonia according to claim 1 or 2, which contains the component (A) in an amount of 55 to 95% by mass based on the total amount of the catalyst.

4.   The catalyst for decomposing ammonia according to any one of claims 1 to 3, which is used for decomposing ammonia into nitrogen and hydrogen in the presence of water vapor.

5.   A method for producing the catalyst for decomposing ammonia according to any one of claims 1 to 4, comprising dissolving a water soluble salt of the component (A) and a water soluble salt of the component (B) in water to produce a precipitate by an alkaline compound, followed by filtering, washing with water, drying, and heat-treating the precipitate.

6.   A method for producing the catalyst for decomposing ammonia according to any one of claims 1 to 4, comprising adding a water soluble salt of the component (A) to water to prepare an aqueous solution,
adding an alkaline compound to the aqueous solution to precipitate fine particles containing the component (A) to prepare a dispersion of the fine particles,
adding a sol solution dispersing fine particles containing the component (B) with stirring the dispersion of the fine particles to produce a precipitate comprising the fine particles containing the component (A) and the fine particles containing the component (B),
followed by filtering, washing with water, drying, and heat-treating the precipitate.

7.   A catalyst for decomposing ammonia, comprising
at least one element (component (A)) selected from the elements of groups 6 to 10 of the long-form periodic table, and an oxide and/or complex oxide of at least one element (component (B)) selected from the elements of groups 2 to 5 and groups 12 to 15 of the long-form periodic table,
wherein when the catalyst is pressure-formed into a film, and the characteristic X-ray intensity of the component (A) on an arbitrary straight line in the surface of the film-formed catalyst is measured using an electron probe microanalyzer (EPMA) having a beam diameter of 1 μm,

the average value of the characteristic X-ray intensity (S) and the standard deviation of the characteristic X-ray intensity ($\sigma$) calculated from the obtained measurement results satisfies $0 \leq \sigma/S < 0.15$.

8. The catalyst for decomposing ammonia according to claim 7, which contains the component (A) in an amount of 50 to 97% by mass based on the total amount of the catalyst.

9. A method for producing the catalyst for decomposing ammonia according to claim 7 or 8, comprising bringing an aqueous solution of the component (A) into a sufficiently stirred state with ultrasonic treatment, and heat-treating a precipitate obtained by adding thereto an aqueous liquid containing a precursor of the oxide and/or complex oxide of the component (B).

10. A method for producing hydrogen, comprising decomposing ammonia to obtain hydrogen, using the catalyst according to any one of claims 1 to 4, 7 and 8.

11. A method for producing hydrogen, comprising decomposing ammonia into nitrogen and hydrogen in the presence of water vapor, using the catalyst according to any one of claims 1 to 4, 7 and 8.

12. A method for producing hydrogen, comprising decomposing ammonia in a gas containing 1 to 40% by volume of water vapor, 1 to 99% by volume of ammonia, 0 to 50% by volume of hydrogen, and nitrogen (the total volume of water vapor, ammonia, hydrogen and nitrogen is 100% by volume) into nitrogen and hydrogen, using the catalyst according to any one of claims 1 to 4, 7 and 8.

## INTERNATIONAL SEARCH REPORT

| International application No. |
|---|
| PCT/JP2011/057821 |

A. CLASSIFICATION OF SUBJECT MATTER
*B01J23/75*(2006.01)i, *B01J35/10*(2006.01)i, *B01J37/03*(2006.01)i, *B01J37/04* (2006.01)i, *B01J37/16*(2006.01)i, *C01B3/04*(2006.01)i

According to International Patent Classification (IPC) or to both national classification and IPC

B. FIELDS SEARCHED

Minimum documentation searched (classification system followed by classification symbols)
B01J23/75, B01J35/10, B01J37/03, B01J37/04, B01J37/16, C01B3/04

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-276700 A  (Hitachi, Ltd.), 28 October 1997 (28.10.1997), entire text (Family: none) | 1-12 |
| A | JP 8-24651 A  (Nippon Shokubai Co., Ltd.), 30 January 1996 (30.01.1996), entire text (Family: none) | 1-12 |
| A | JP 9-313940 A  (NKK Corp.), 09 December 1997 (09.12.1997), entire text (Family: none) | 1-12 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June, 2011 (29.06.11) | 12 July, 2011 (12.07.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/057821

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-253494 A (NKK Corp.),<br>30 September 1997 (30.09.1997),<br>entire text<br>(Family: none) | 1-12 |
| A | WO 2009/075311 A1 (Nikki-Universal Co., Ltd.),<br>18 June 2009 (18.06.2009),<br>entire text<br>(Family: none) | 1-12 |
| A | JP 2000-44228 A (Japan Pionics Co., Ltd.),<br>15 February 2000 (15.02.2000),<br>entire text<br>(Family: none) | 1-12 |

Form PCT/ISA/210 (continuation of second sheet) (July 2009)

## INTERNATIONAL SEARCH REPORT

| International application No. |
| --- |
| PCT/JP2011/057821 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
   See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2011/057821 |

Continuation of Box No.III of continuation of first sheet(2)

For the following reasons, it is admitted that this international application involves the two inventions which do not comply with the requirement of unity of invention.

First invention: Claims 1 - 4, and claims 5, 6 and 10 - 12 dependent on claims 1 - 4
Second invention: Claims 7 and 8, and claims 9 - 12 dependent on claims 7 and 8

The "technical feature" of the invention of claims 1 - 4 relates to an ammonia decomposing catalyst characterized in that an A-component has a calculated specific surface area (S2) of an A-component of 20 $m^2/g$ or more, and in that the ratio (S2/S1) of the calculated specific surface area (S2) of the A-component and the specific surface area (S1) of the catalyst itself is 0.15 to 0.85. The "technical feature" of the invention of claims 7 and 8 relates to an ammonia decomposing catalyst characterized in that, when said catalyst is pressure-molded into a film shape and when the characteristic X-ray intensity of the A-component on an arbitrary straight line in the film-shaped catalyst surface is measured by using an electron-probe microanalyzer (EPMA) having a beam diameter of 1 μm, the average value (S) of the characteristic X-ray intensity calculated from the measurement result obtained and the standard deviation (σ) of the characteristic X-ray intensity satisfy relations of $0 \leq \sigma/S < 0.15$.
The aforementioned "technical features" of the first invention and the second invention are common, if compared, in the "ammonia decomposing catalyst", but different in the remaining points.
The aforementioned "common ammonia decomposing catalyst" cannot be admitted to belong to the "special technical feature", since the same is disclosed in documents 1 - 6 (as referred to the individual documents, the claims, the embodiments and so on) and is well known in the art.
Thus, these inventions cannot be considered so relative as to form a single general inventive concept, since they are not so technically related as to involve one or two or more of the same or corresponding special technical features.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5329372 A
- JP 2198638 A
- JP 2198639 A